# EUROPEAN PATENT APPLICATION

(11) **EP 1 447 386 A1**
(43) Date of publication of application: **18.08.2004**
(21) Application number: 03002645.4
(22) Date of filing: 11.02.2003
(51) Int. Cl.: C02F 11/00, C02F 11/12

(54) **A method of processing organic sludge**

(71) Applicant: Omanik, Stefan, Ing., 18600 Praha 8 (CZ)
(72) Inventor: Omanik, Stefan, Ing., 18600 Praha 8 (CZ); Horcicka, Vaclav, Ing., 28922 Lysa nad Labem (CZ)
(74) Representative: Pelikanova, Ivana

(57) **Abstract**

Organic sludge, particularly from sewage clarification plants and industrial and agricultural production, is exposed to a temperature in the range from 700 to 900°C, at which temperature the sludge is dried in reducing medium. A part of the sludge, which agglomerates into lumps in drying at a temperature above 600°C, is subsequently classified, mechanically disintegrated and then the drying is finished to a dry matter content above 90% by weight. Having been dried, the output sludge is further disintegrated and homogenized by exposing it to simultaneous action of mechanical impacts produced by rotating chain links, air turbulence and pressurized air surges produced in a processing chamber at a circumferential velocity of the free chain ends around the sonic speed, which causes sludge disintegration to powder consistency, simultaneous heating of said sludge above the temperature of 100°C, and making the water bound in the cellular structure of the organic substrate free. The disintegrated and homogenized sludge with grain size below 1 mm is incinerated or used as an additive for gardening substrate.

## Description

### Field of the Invention

The present invention relates to processing of dewatered organic sludge from sewage clarification plants and from industrial and agricultural production.

### Background of the Invention

Organic sludge from sewage clarification plants or from industrial or agricultural production has relative water content about 25 to 35% in dried state. Because they can be unwholesome and their analysis with regard to their infectiousness is lengthy, it is necessary to store them till the results are obtained. It is desirable to dispose the sewage clarification sludge immediately after it is produced. This is met thermally by drying the sludge to more then 90% dry matter content using a drying medium (air, fuel gas) temperature below 200°C. This method is used because at drying temperatures above 200°C the sludge has tendency to self-ignition. Also, the sludge drying at a higher temperature causes sludge agglomeration into lumps. Water content in the lumps is much higher than that in the loose material. In such smaller or bigger lumps the moisture is kept unchanged and without a mechanical disintegration of such lumps it is difficult to get rid of it. Consequently, the dried material is inhomogeneous with regard to water content distribution. At the same time, the wet lumps keep high temperature for longer time and in their storage sludge self-ignition occurs. Because of the above reasons, the drying is carried out longer and at lower temperatures under 200°C. A disadvantage of this is high energy consumption for drying. Most often, natural gas or electric power are used. Also, high initial investment costs are related to this technology.
An objective of this invention is an energy saving sludge processing and its subsequent cost effective use.

### Summary of the Invention

The objective of this invention is reached by a method of processing dewatered organic sludge which method comprises exposing the sludge to a temperature above 600°C, preferably in the range of 700°C to 900°C, at which temperature the sludge is dried in reducing medium. At such temperatures, water is rapidly evaporated from the sludge and a temperature above 600°C itself forms a reducing medium for the sludge, which reducing medium prevents sludge self-ignition. This method of drying sludge takes only about a half of the drying time in comparison to the prior art sludge drying methods carried out at a temperature under 200°C. Also, this means that the energy consumption is roughly halved if based on comparable dried sludge quantity in comparison to the prior art processing methods.

The sludge part which agglomerates into lumps during drying is subsequently classified, mechanically disintegrated and its drying is then finished to a dry matter content above 90% by weight. Having finished the drying, the output sludge is further disintegrated and homogenized by exposing the sludge to simultaneous action of mechanical impacts produced by rotating chain links, air turbulence and pressurized air surges produced in a processing chamber at a circumferential velocity of the free chain ends around the sonic speed. This causes sludge disintegration to powder consistency, its simultaneous heating above the temperature of 100°C and so the water bound in the cell structure of the organic substrate is made free. An advantage of this method is the fact that the processed sludge is very finely disintegrated and homogenized. The grain size is lower than 200 µm. During the sludge destruction to the powdery consistence and heating up the residual water in the sludge is evaporated and the microorganisms (bacteria) in the sludge are destroyed.

The disintegrated and homogenized sludge with grain size below 1 mm is incinerated. The so treated sludge can be preferably incinerated in special powder burners, eventually in fluidising rotational burners and utilized as an energy source for in-house processing. The remaining quantity of the processed sludge can be used as fuel, eventually as an additive for garden substrate.

In an alternative embodiment of this invention the sludge is exposed to a temperature in range from 700 to 900°C, at which temperature the sludge is dried in reducing medium. The agglomerated sludge lumps having lump size above 10 mm are then classified on sieves, mechanically disintegrated and homogenized so that they are exposed to simultaneous action of mechanical impacts produced by rotating chain lings, air turbulence and pressurized air surges produced in an processing chamber at a circumferential velocity of the free chain ends around the sonic speed. This causes sludge disintegration to powder consistency with grain size below 200 µm, its simultaneous heating above the temperature of 100°C and so the remaining water in sludge is evaporated and the microorganisms present in the sludge are destroyed and the water bound in the cell structure of the organic substrate is made free.

### Detailed Description of the Invention

The sewage clarification plant sludge is introduced continuously into a drum or belt oven. Heated air or mixture of air and flue gas having temperature of 600 to 900°C, preferably 800 to 900°C at the input of the sludge flow is the drying medium. At this temperature water rapidly evaporates from the sludge. A temperature above 600°C forms reducing medium preventing sludge ignition. This method of drying takes about half of the time necessary for the prior art methods of drying at temperatures below 200°C. That means halved energy consumption in comparison to drying below 200°C for drying of a comparable sludge quantity.

However, even in drying at high temperatures 600 to 900°C, the sludge is agglomerated into lumps. Therefore, the lumps having size above 10 mm are classified on sieves. Subsequently, the lumps are mechanically disintegrated and the drying is finished. Alternatively, the lumps can be recirculated back into the incoming sludge. After a repeated finishing of drying the lumps disintegrate to grain size below 5 mm.

At the oven output the fine sludge (quantity about 80% of the total output after drying process) with grain size below 5 mm having homogenous dry matter content (above 90% by weight) and the sorted out lumps with size above 5 mm are obtained. Subsequently, the lumps are mechanically disintegrated and dried again to obtain dry matter content above 90% by weight.

The produced dried sludge with more than 90% by weight of dry matter content can be used as energy source for sludge drying. Then, the sludge is incinerated, preferably in special powder or fluidising rotational burners. Because the sludge at the output of the drier has grain size larger then what is the size suitable for the burners (i.e. above 1 mm), the dried sludge is disintegrated and homogenized to grain size smaller than that of coal powder, i.e. smaller than 1 mm, preferably smaller than 200 µm, before incineration.

The disintegration and homogenisation of the output sludge having grain size mainly above 1 mm, so that it corresponds in granularity roughly to the coal powder, or eventually is even finer and can be incinerated well in fluidising burners, is preferably carried out as follows: The sludge is exposed to simultaneous action of mechanical impacts of rotating chain links, air turbulence and pressurised air surges produced in a processing chamber at a circumferential velocity of the free chain ends around the sonic speed. The mechanical impacts and turbulence combined with the sound waves effect at the sonic speed and their interferences cause sludge disintegration into powder consistence having grains with size about 200 µm. During this disintegration the powdered sludge is heated up to a temperature above 100°C what causes that the residual water in the sludge is evaporated and that microorganisms (bacteria) present are destroyed. Apart from the above-mentioned heating up, a drying effect is also obtained by action of the centrifugal force of the rotating member on cellular structures of the organic substrate what is accompanied by freeing of the water bound in cells.

The so obtained fine sludge then serves as an energy source for the sludge drying process (less than 50 % of the dried sludge), the remaining quantity of the fine sludge can be used as an energy source - fuel - for other purposes, eventually as an additive for gardening substrates.

### Industrial Use

The method of disposing and subsequent use of organic sludge according to the present invention is determined for processing of organic sludge obtained in sewage clarification plants, in industrial and agricultural production. About one half of the sludge processed will find use as an energy source in sludge processing, the remaining part as a fuel or as an additive for gardening substrates.

## Claims

1. A method of processing organic sludge, particularly sludge from sewage clarification plants and from industrial and agricultural production, **characterised in that** said sludge is exposed to a temperature above 600°C, at which temperature said sludge is dried in reducing medium.

2. The method according to Claim 1 **characterized in that** said sludge is exposed to a temperature in the range from 700 to 900°C.

3. The method according to Claim 1 or 2 **characterized in that** a part of said sludge that agglomerates into lumps during drying is subsequently classified, mechanically disintegrated and then the drying is finished to a dry matter content which is above 90% by weight.

4. The method according to anyone of Claims 1 to 3 **characterized in that** said output sludge where said drying has been finished is further disintegrated and homogenized by exposing said sludge to simultaneous action of mechanical impacts produced by rotating chain links, air turbulence and pressurized air surges produced in a processing chamber at a circumferential velocity of said free chain ends around the sonic speed, whereby, said sludge is disintegrated to powder consistency with grain size below 200 µm and simultaneously heated above the temperature 100°C and so the water bound in the cell structure of the organic substrate is made free.

5. The method according to Claim 3 **characterized in that** said disintegrated and homogenized sludge with grain size below 1 mm is incinerated or used as an additive for gardening substrate.

6. A method of processing organic sludge, particularly from sewage clarification plants and industrial and agricultural production **characterized in that** said sludge is exposed to a temperature in range from 700 to 900°C, at which temperature the sludge is dried in reducing medium and then said sludge is mechanically disintegrated and the drying is finished to a dry matter content more than 90% by weight, having been dried said output sludge is further disintegrated and homogenized by exposing it to simultaneous action of mechanical impacts produced by rotating chain links, air turbulence and pressurized air surges produced in a processing chamber at a circumferential velocity of the free chain ends around the sonic speed, what causes sludge disintegration to powder consistency with grain size below 200 µm, and simultaneously heating up of said sludge above the temperature of 100°C, evaporation of the residual water in said sludge and destroying the microorganisms present in said sludge and making the water bound in the cellular structure of the organic substrate free.

## Amended claims

### Amended claims in accordance with Rule 86(2) EPC.

**1.** A method of processing organic sludge, particularly sludge from sewage clarification plants and from industrial and agricultural production, where the sludge is exposed to a temperature above 600° C, **characterized in that** the sludge is dried in a reducing medium at said temperature above 600° C, a part of said sludge agglomerated during drying into lumps being than subsequently classified, mechanically disintegrated and finished by further drying.

**2.** The method according to claim 1, **characterized in that** the sludge after its finished drying is further disintegrated and homogenized by exposing it to simultaneous action of mechanical impacts by rotating chain links, air turbulence and surges of pressurized air produced in a processing chamber at a circumferential velocity of said free chain ends around the sonic speed, the sludge being such disintegrated to powder consistency with grain size below 200 µm and simultaneously heated above the temperature 100°C, so that the water bound in the cell structure of the organic substrate is made free.

**3.** The method according to claim 1, **characterized in that** said sludge is exposed to a temperature in the range from 700°C to 900°C, at this temperature the sludge being dried in reducing medium and then mechanically disintegrated, so that the drying being finished and this output sludge being further disintegrated and homogenized by exposing it to simultaneous action of mechanical impacts produced by rotating chains links, air turbulence and surges of pressurized air produced in a processing chamber at a circumferential velocity of the free chain ends around the sonic speed, what causes the sludge being disintegrated to powder consistency with grain size below 200 µm and simultaneously heated up to a temperature above 100°C, the residual water inside the sludge being so evaporated and microorganisms being present inside the sludge being so destroyed and the water bound in the cellular structure of its organic substrate being made free.
